# EUROPÄISCHE PATENTSCHRIFT

(11) **EP 1 274 612 B1**
(45) Veröffentlichungstag und Bekanntmachung des Hinweises auf die Patenterteilung: **07.07.2004**
(21) Anmeldenummer: 01929484.2
(22) Anmeldetag: 31.03.2001
(51) Int. Cl.: B60R 22/34

(54) **BEFESTIGUNGSANORDNUNG FÜR SICHERHEITSGURTAUFROLLER MIT VERSTÄRKUNGSPLATTE**
FASTENING ASSEMBLY FOR A SAFETY BELT RETRACTOR COMPRISING A REINFORCEMENT PLATE
ENSEMBLE DE FIXATION POUR DISPOSITIF D'ENROULEMENT DE CEINTURE DE SECURITE COMPRENANT UNE PLAQUE DE RENFORCEMENT

(30) Priorität: 19.04.2000 DE 10019276
(43) Veröffentlichungstag der Anmeldung: 15.01.2003
(73) Patentinhaber: AUTOLIV DEVELOPMENT AB, 447 83 Vargarda (SE)
(72) Erfinder: SINGER, Klaus-Peter, 22399 Hamburg (DE)
(74) Vertreter: Müller, Karl-Ernst, Dr., Dipl.-Ing.
(86) Internationale Anmeldenummer: PCT/EP2001/003690
(87) Internationale Veröffentlichungsnummer: WO 2001/081130

(56) Entgegenhaltungen:
- DE-A- 3 002 900
- DE-A- 19 714 381
- DE-A- 19 752 191
- PATENT ABSTRACTS OF JAPAN vol. 1998, no. 01, 30. Januar 1998 (1998-01-30) -& JP 09 240426 A (NISSAN MOTOR CO LTD), 16. September 1997 (1997-09-16)

## Beschreibung

Die Erfindung betrifft eine Anordnung zur Befestigung eines Gurtaufrollers an dem Karosserieteil eines Kraftfahrzeuges, wobei das zur Lagerung der Gurtwelle U-förmig mit Seitenschenkeln ausgebildete Gehäuse des Gurtaufrollers eine davon abragende Befestigungslasche mit einer Durchgriffsöffnung für ein mit dem Karosserieteil zu verbindendes Befestigungsmittel aufweist und eine zusätzliche Montageplatte in die Befestigung des Gurtaufrollers am Karosserieteil einbezogen ist, wobei die Montageplatte als gesonderte Verstärkungsplatte mit einer Durchgriffsöffnung für das Befestigungsmittel ausgebildet ist und die Verstärkungsplatte eine schlitzartige Öffnung zur Festlegung des Gurtaufrollers derart aufweist, daß die Durchgriffsöffnungen von Befestigungslasche und Verstärkungsplatte miteinander fluchtend.

Bei Sicherheitsgurtaufrollern ist man generell darum bemüht, aus Gründen der Material- und Gewichtsersparnis und der damit verbundenen Kostenreduzierung die Gehäuse leichter und mit dünneren Blechstärken auszuführen, womit der Nachteil einhergeht, daß die Gehäuse im Bereich ihrer Befestigungslasche sich nicht als ausreichend widerstandsfähig erweisen, und im Hinblick auf eine Schraubbefestigung der Gehäuse die reduzierte Materialstärke für den Fall der Anbringung eines Gewindes für ein Befestigungsmittel nicht mehr ausreichend ist. Abhilfe wird diesbezüglich geschaffen durch das Anbringen zusätzlicher, mit Gewinde versehener Schweißmuttern, womit ein zusätzlicher Fertigungsaufwand für die Gehäuse verbunden ist. Der Nachteil der verminderten verbunden ist. Der Nachteil der verminderten Widerstandskraft an der Befestigungslasche tritt insbesondere dann hervor, wenn der Abzugspunkt für das Gurtband von der in dem U-förmigen Gehäuse gelagerten Gurtwelle der Befestigungslasche des Gehäuses gegenüberliegend ausgerichtet ist, wie dies beispielsweise bei im Bereich der rückseitigen Hutablage in Kraftfahrzeugen angebrachten Gurtaufrollern der Fall ist. In diesem Fall wird bei Belastung des Gurtbandes im Blockierfall ein auf die Befestigungslasche beziehungsweise das Befestigungsmittel wirkendes Moment ausgeübt.

Eine Anordnung mit den gattungsgemäßen Merkmalen ist beispielsweise aus der JP 09 240426 A bekannt. Hierbei ist eine zusätzliche Montageplatte in Form einer gesonderten Verstärkungsplatte in die Befestigung des Gurtaufrollers an dem Karosserieteil einbezogen, indem einerseits die Montageplatte im Formschluß an dem Karosserieteil gehaltert und andererseits der Gurtaufroller formschlüssig an der Montageplatte festlegbar ist, wobei eine die zugeordneten Durchgriffsöffnungen von Gurtaufroller, Montageplatte und Karosserieteil durchgreifende Befestigungsschraube vorgesehen ist.

Mit der bekannten Befestigungsanordnung ist der Nachteil verbunden, daß bei der Montage des Gurtaufrollers an dem Karosserieteil die Montageplatte getrennt von dem Gurtaufroller gehandhabt und gehalten werden muß, so daß die Montage von Montageplatte und Gurtaufroller aneinander wie auch gemeinsam an dem Karosserieteil umständlich ist.

Der Erfindung liegt daher die Aufgabe zugrunde, eine Befestigungsanordnung für einen Sicherheitsgurtaufroller zur Verfügung zu stellen, die bei der Montage des Sicherheitsgurtaufrollers im Kraftfahrzeug einfach zu handhaben ist und eine sichere Befestigung auch dünnwandiger Gehäuse mit einer ausreichenden Kraftübertragung ermöglicht.

Die Lösung dieser Aufgabe ergibt sich aus dem Anspruch 1; vorteilhafte Ausgestaltungen und Weiterbildungen der Erfindung sind in den Unteransprüchen angegeben.

Die Erfindung sieht in ihrem Grundgedanken vor, daß die schlitzartige Öffnung der Verstärkungsplatte zum Aufstecken auf die Befestigungslasche des Gurtaufrollers eingerichtet ist und die Befestigungslasche bei der Montage des Gurtaufrollers an dem Karosserieteil zwischen der Verstärkungsplatte und dem Karosserieteil zu liegen kommt. Mit der Erfindung ist der Vorteil verbunden, daß die gesonderte Verstärkungsplatte auf die Befestigungslasche aufsteckbar ist, so daß ein wesentlicher zusätzlicher Montageaufwand nicht entsteht. Da die gegebenenfalls dünnwandige Befestigungslasche des Gehäuses des Gurtaufrollers bei der Montage zwischend der Verstärkungsplatte und dem Karosserieteil zu liegen kommt, ist eine ausreichende Kraftübertragung bei einer Belastung des Gehäuses des Sicherheitsgurtaufrollers gegeben. Die Verstärkungsplatte wird nach einem Ausführungsbeispiel der Erfindung mit einer solchen Materialstärke ausgeführt, daß in der Verstärkungsplatte ein Düsendurchzug für das Gewinde einer einzubringenden Befestigungsschraube auszubilden ist.

Nach einem Ausführungsbeispiel der Erfindung ist vorgesehen, daß die Verstärkungsplatte einen die Durchgriffsöffnung aufweisenden Bereich und einen bis unter die Seitenschenkel des U-förmigen Gehäuses reichenden Bereich aufweist. Das gegebenenfalls von dem an einer der Befestigungslasche des Gehäuses gegenüberliegenden Seite des Gurtaufrollers ablaufende Gurtband übt unter Zuglast ein Kippmoment auf das Gehäuse aus, dem die Verstärkungsplatte in vorteilhafter Weise entgegenwirkt, indem sie die Befestigungslasche des Gehäuses niederpreßt und somit einem Abheben der Befestigungslasche vom Karosserieteil entgegenwirkt. In einer vorteilhaften Ausführungsform der Erfindung kann zusätzlich vorgesehen sein, daß die Verstärkungsplatte in ihrem die Seitenschenkel untergreifenden Bereich Aufnahmeöffnungen zur Aufnahme von an den Seitenschenkeln des Gehäuses vorstehenden Vorsprüngen aufweist. Hiermit ist in vorteilhafter Weise über das Eingreifen der an den Seitenschenkeln in deren Ebene vorspringenden Vorsprünge in die Aufnahmeöffnungen der Verstärkungsplatte:eine Stabilisierung und Distanzhaltung für die Seitenschenkel sowie eine Aufnahmemöglichkeit für Schubkräfte in der Ebene des Karosserieteils verwirklicht.

Soweit das der Befestigung des Sicherheitsgurtaufrollers dienende Karosserieteil eben ausgeführt ist, kann nach einem Ausführungsbeispiel der Erfindung auch die Verstärkungsplatte als ebenes Bauteil ausgebildet sein und in Anlage an das Karosserieteil gebracht werden.

Soweit die zur Befestigung von Sicherheitsgurtaufrollern herangezogenen Karosserieteile im Bereich der B-Säule eines Fahrzeuges oder eines Fahrgastsitzes häufig mit Durchsickungen versehen sind, um Raum für die Anordnung des Befestigungsmittels zu schaffen, ist nach einem Ausführungsbeispiel der Erfindung vorgesehen, daß die Verstärkungsplatte eine gebogene Form mit dem die Durchgriffsöffnung aufweisenden Bereich und dem davon abgebogenen, die Seitenschenkel des Gehäuses untergreifenden Bereich aufweist. In vorteilhafter Weise ist es durch die Herstellung der erforderlichen Abbiegung. möglich, die als Standardbauteil in ebener Form hergestellte Verstärkungsplatte durch einfaches Abbiegen an die jeweilige Struktur des Karosserieteils anzupassen.

In der Zeichnung ist ein Ausführungsbeispiel der Erfindung wiedergegeben, welches nachstehend beschrieben ist. Es zeigen:
- Fig. 1: einen Gurtaufroller mit aufgesteckter Verstärkungsplatte,
- Fig. 2 a, b: in unterschiedlichen Ansichten das Gehäuse des Gurtaufrollers gemäß Figur 1 mit aufgesteckter Verstärkungsplatte,

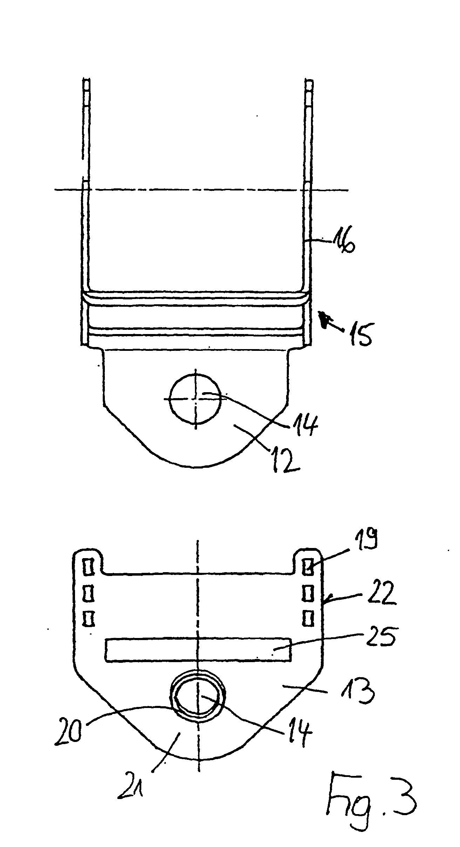

- Fig. 3: Gurtaufrollergehäuse und Verstärkungsplatte in einer getrennten Darstellung in Draufsicht,
- Fig. 4: einen an einem Karosserieteil mittels Verstärkungsplatte befestigten Gurtaufroller in Seitenansicht,
- Fig. 4a: die Verstärkungsplatte gemäß Figur 4 in einer Einzeldarstellung,
- Fig. 5: ein anderes Ausführungsbeispiel des Gegenstandes der Figur 4,
- Fig. 5a: die Verstärkungsplatte gemäß Figur 5 in einer Einzeldarstellung.

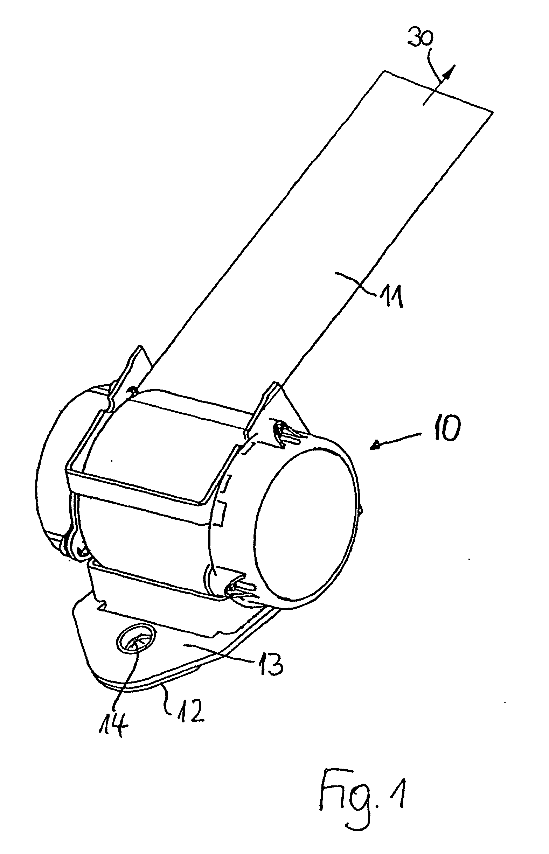

Aus Figur 1 ist ein Gurtaufroller 10 ersichtlich, auf dem ein Gurtband 11 aufgewickelt ist, welches in Richtung des Pfeils 30 von der das Gurtband tragenden Gurtwelle abziehbar ist. Das Gehäuse des Gurtaufrollers 10 weist eine vorstehende Befestigungslasche 12 mit einer Durchgriffsöffnung 14 für ein der Befestigung des Gurtaufrollers 10 an einem Karosserieteil dienendes Befestigungsmittel auf. Es handelt sich bei diesem Ausführungsbeispiel um einen Gurtaufroller 10 mit sogenannter "linksdrehender" Gurtwelle, bei dem das Gurtband 11 entsprechend den Einbauerfordernissen im Kraftfahrzeug von der der Befestigungslasche 12 des Gehäuses gegenüberliegenden Seite in einer entgegengesetzt zur Richtung der Befestigungslasche 12 liegenden Richtung von dem Gurtaufroller 10 abläuft. In die Befestigung des Gurtaufrollers 10 ist eine zusätzliche Verstärkungsplatte 13 einbezogen.

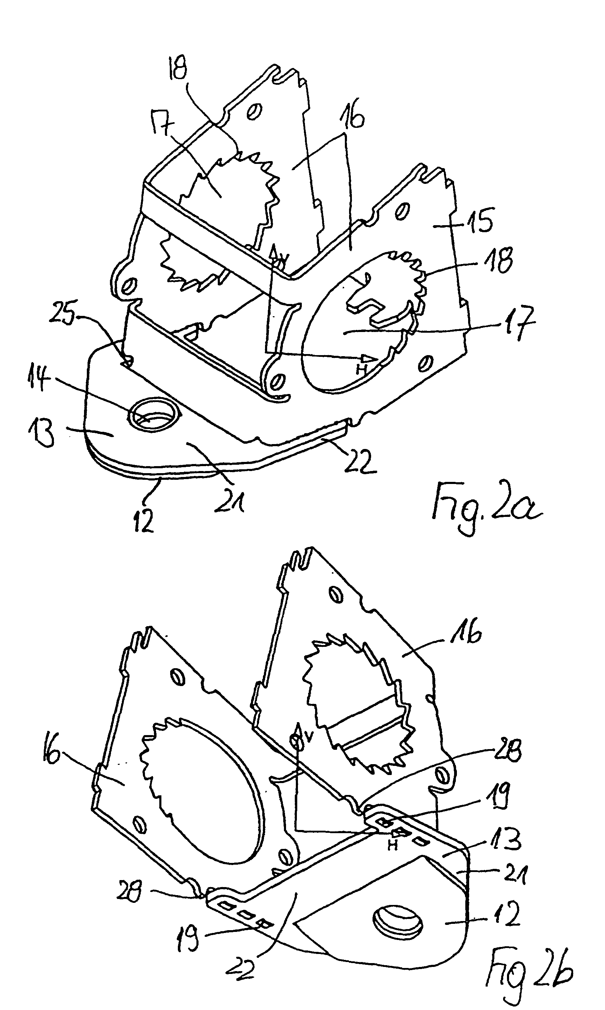

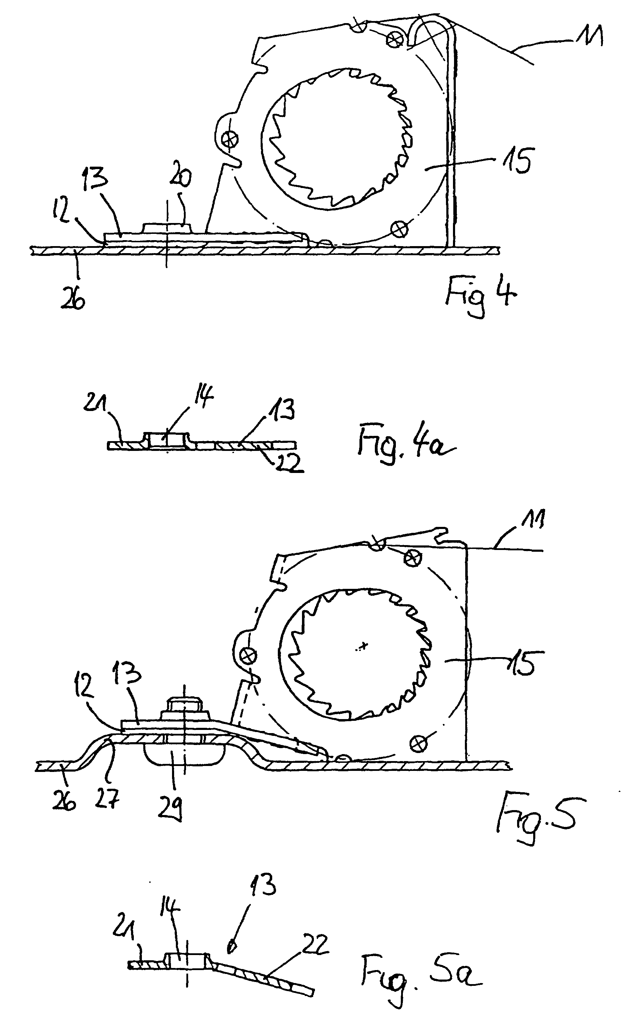

Wie den Figuren 2a und 2b im Einzelnen zu entnehmen ist, ist das Gehäuse 15 des Gurtaufrollers mit Seitenschenkeln 16 ausgebildet, in denen Ausnehmungen 17 zur Lagerung der nicht dargestellten Gurtwelle angeordnet sind; die Ausnehmungen 17 sind in unterschiedlicher Ausgestaltung mit einer Blockierverzahnung 18 für die Blockiermechanik des Gurtaufrollers versehen. Wie sich aus einer Zusammenschau der Figuren 2a, 2b ergibt, weist die Verstärkungsplatte 13 eine schlitzartige Öffnung 25 auf, durch welche die Befestigungslasche 12 des Gehäuses 15 des Gurtaufrollers derart hindurchsteckbar ist, daß die Befestigungslasche 12 bei der in den Figuren 4 und 5 dargestellten Befestigung des Gurtaufrollers zwischen der Verstärkungsplatte 13 und dem Karosserieteil zu liegen kommt; damit stellt sich eine fluchtende Ausrichtung der in der Befestigungslasche 12 und in der Verstärkungsplatte 13 jeweils angeordneten Durchgriffsöffnungen 14 für das einzubringende Befestigungsmittel ein.

Die Verstärkungsplatte 13 weist dabei einen die Durchgriffsöffnung 14 mit der schlitzartigen Öffnung 25 aufweisenden Bereich 21 auf und erstreckt sich mit einem weiteren Bereich 22 bis unter die Seitenschenkel 16 des Gehäuses 15 und untergreift dieses. In diesem Bereich 22 ist die Verstärkungsplatte 13 mit Aufnahmeöffnungen 19 versehen, in die beim Aufsetzen des Gehäuses 15 in der Ebene der Seitenschenkel 16 angeordnete und über diese vorstehende Vorsprünge 28 eingreifen, so daß die Seitenschenkel 16 in dem mit den Vorsprüngen 28 versehenen Teilbereich durch die Verstärkungsplatte 13 fixiert und damit auf Distanz gehalten sind. Damit ist insgesamt eine Verstärkung des Gehäuses 15 verbunden. Die Materialstärke der Verstärkungsplatte 13 ist derart gewählt, daß die Anbringung eines Düsendurchzuges 20 für ein Gewinde möglich ist.

Bei dem in den Figuren 4, 4a dargestellten Ausführungsbeispiel ist das Gehäuse 15 des Gurtaufrollers an einem ebenen Karosserieteil 26 befestigt, wozu die Verstärkungsplatte 13 als ebenes Bauteil ausgebildet ist.

Soweit ein Karosserieteil 26 eine Durchsickung 27 zur Schaffung eines das Befestigungsmittel 29 aufnehmenden Raumes aufweist, ist es leicht möglich, die in Figur 4a dargestellte Verstärkungsplatte 13 durch Abbiegen ihres die Seitenschenkel 16 des Gehäuses untergreifenden Bereichs 22 an die Form und Höhe der Durchsickung 27 des Karosserieteils 26 anzupassen, wie dies in Figur 5 beziehungsweise 5a dargestellt ist.

## Patentansprüche

1. Anordnung zur Befestigung eines Gurtaufrollers (10) an dem Karosserieteil (26) eines Kraftfahrzeuges, wobei das zur Lagerung der Gurtwelle U-förmig mit Seitenschenkeln (16) ausgebildete Gehäuse (15) des Gurtaufrollers (10) eine davon abragende Befestigungslasche (12) mit einer Durchgriffsöffnung (14) für ein mit dem Karosserieteil (26) zu verbindendes Befestigungsmittel aufweist und eine zusätzliche Montageplatte in die Befestigung des Gurtaufrollers (10) am Karosserieteil (26) einbezogen ist, wobei die Montageplatte als gesonderte Verstärkungsplatte (13) mit einer Durchgriffsöffnung (14) für das Befestigungsmittel ausgebildet ist und die Verstärkungsplatte (13) eine schlitzartige Öffnung (25) zur Festlegung des Gurtaufrollers (10) derart aufweist, daß die Durchgriffsöffnungen (14) von Befestigungslasche (12) und Verstärkungsplatte (13) miteinander fluchten, **dadurch gekennzeichnet, daß** die schlitzartige Öffnung (25) der Verstärkungsplatte (13) zum Aufstecken auf die Befestigungslasche (12) des Gurtaufrollers (10) eingerichtet ist und die Befestigungslasche (12) bei der Montage des Gurtaufrollers (10) an dem Karosserieteil (26) zwischen der Verstärkungsplatte (13) und dem Karosserieteil (26) zu liegen kommt.

2. Befestigungsanordnung nach Anspruch 1, **dadurch gekennzeichnet, daß** die Verstärkungsplatte (13) einen die Durchgriffsöffnung (14) aufweisenden Bereich (21) und einen bis unter die Seitenschenkel (16) des U-förmigen Gehäuses (15) reichenden Bereich (22) aufweist.

3. Befestigungsanordnung nach Anspruch 2, **dadurch gekennzeichnet, daß** die Verstärkungsplatte (13) in ihrem die Seitenschenkel (16) untergreifenden Bereich (22) Aufnahmeöffnungen (19) zur Aufnahme von an den Seitenschenkeln (16) des Gehäuses (15) vorstehenden Vorsprüngen (28) aufweist.

4. Befestigungsanordnung nach einem der Ansprüche 1 bis 3, **dadurch gekennzeichnet, daß** die Verstärkungsplatte (13) mit einer die Anbringung eines Düsendurchzuges (20) für das Gewinde des Befestigungsmittels ermöglichenden Materialstärke ausgeführt ist.

5. Befestigungsanordnung nach einem der Ansprüche 1 bis 4, **dadurch gekennzeichnet, daß** die Verstärkungsplatte (13) als ebenes Bauteil ausgebildet ist.

6. Befestigungsanordnung nach einem der Ansprüche 1 bis 4, **dadurch gekennzeichnet, daß** die Verstärkungsplatte (13) eine gebogene Form mit dem die Durchgriffsöffnung (14) aufweisenden Bereich (21) und dem davon abgebogenen, die Seitenschenkel (16) des Gehäuses (15) untergreifenden Bereich (22) aufweist.

## Claims

1. An arrangement for securing a belt retractor (10) on the body part (26) of a motor vehicle, whereby the housing (15) of the belt retractor (10), which is U-shaped and has side shanks (16) and supports therein a belt shaft, comprises a fastening bracket (12) projecting therefrom having an access opening (14) for a securement means operable to secure the belt retractor to the body part (26) of the motor vehicle and an additional mounting plate deployed for the securement of the belt retractor on the body part, and whereby the mounting plate is configured as a separate reinforcement plate (13) having an access opening (14) for the securement means and the reinforcement plate (13) has a slot-type opening (25) for securing the belt retractor (10) such that the access openings (14) in the fastening bracket (12) and the reinforcement plate (13) align with one another **characterized in that** the slot-type opening (25) of the reinforcement plate (13) is arranged for insertion of the fastening bracket (12) of the belt retractor (10) and that the fastening bracket (12) comes to rest between the reinforcement plate (13) and the body part (26) of the motor vehicle during mounting of the belt retractor (10) on the body part (26).

2. A securing arrangement according to claim 1, **characterized in that** the reinforcement plate (13) has a region (21) in which its access opening (14) is formed and a region (22) extending under the side shanks (16) of the U-shaped housing (15).

3. A securing arrangement according to claim 2, **characterized in that** the reinforcement plate (13), in the region (22) thereof which undergrips the side shanks (16), has receipt openings (19) for receiving therein projections (28) projecting from the side shanks (16) of the housing (15).

4. A securing arrangement according to one of claims 1 to 3, **characterized in that** the reinforcement plate (13) is configured with a material thickness permitting the provision on the reinforcement plate (13) of a jetted throughbore (20) for the receipt therein of a threaded fastener receiver of the securement means.

5. A securing arrangement according to one of claims 1 to 4, **characterized in that** the reinforcement plate (13) is configured as a planar component.

6. A securing arrangement according to one of claims 1 to 4, **characterized in that** the reinforcement plate (13) has a bent shape in its region (21) having its access opening (14) and a bent shape in its region (22) which undergrips the side shanks (16) of the housing (15).

## Revendications

1. Système de fixation d'un enrouleur de ceinture (10) à l'élément de carrosserie (26) d'un véhicule automobile, le boîtier (15) de l'enrouleur de ceinture (10), conformé en logement de la broche de ceinture en forme de U avec branches latérales (16), présentant une bride de fixation (12) qui en sort avec une ouverture (14) permettant le passage d'une pièce de fixation à l'élément de carrosserie (26) et intégrant une plaque de montage supplémentaire pour la fixation de l'enrouleur de ceinture (10) à l'élément de carrosserie (26), la plaque de montage étant conformée en plaque de renfort (13) spéciale avec une ouverture (14) pour la pièce de fixation et la plaque de renfort (13) présentant une ouverture (25) en forme de fente pour la mise en place de l'enrouleur de ceinture (10) de manière que les ouvertures (14) de la bride de fixation (12) et de la plaque de renfort (13) coïncident, **caractérisé en ce que** l'ouverture en forme de fente (25) de la plaque de renfort (13) est conçue pour l'emboîtement sur la bride de fixation (12) de l'enrouleur de ceinture (10) et **en ce que** la bride de fixation (12) s'applique entre la plaque de renfort (13) et l'élément de carrosserie (26) lors du montage de l'enrouleur de ceinture (10) sur l'élément de carrosserie (26).

2. Système de fixation selon la revendication 1, **caractérisé en ce que** la plaque de renfort (13) présente une partie (21) comprenant l'ouverture (14) et une partie (22) aboutissant en dessous des branches latérales (16) du boîtier (15) en forme de U.

3. Système de fixation selon la revendication 2, **caractérisé en ce que** la plaque de renfort (13) présente, dans sa partie (22) aboutissant en dessous des branches latérales (16), des orifices (19) servant à loger des saillies (28) débordant des branches latérales (16) du boîtier (15).

4. Système de fixation selon l'une des revendications 1 à 3, **caractérisé en ce que** la plaque de renfort (13) présente une épaisseur de matériau permettant la réalisation d'un passage de buse (20) pour le filetage de la pièce de fixation.

5. Système de fixation selon l'une des revendications 1 à 4, **caractérisé en ce que** la plaque de renfort (13) est conformée en élément plat.

6. Système de fixation selon l'une des revendications 1 à 4, **caractérisé en ce que** la plaque de renfort (13) présente une forme courbe avec la partie (21) comprenant l'ouverture (14) et la partie (22) recourbée qui la continue aboutissant en dessous des branches latérales (16) du boîtier (15).
